# EUROPEAN PATENT SPECIFICATION

(11) **EP 3 546 394 B1**
(45) Date of publication and mention of the grant of the patent: **16.12.2020**
(21) Application number: 19158798.9
(22) Date of filing: 22.02.2019
(51) Int. Cl.: B65G 21/06, B65G 21/16, B65G 21/20, B65G 15/62, B65G 15/64, B65G 17/08

(54) **SUPPORT STRUCTURE WITH IMPROVED FASTENING MEANS FOR AN ARTICULATED-LINK CONVEYOR**
TRAGKONSTRUKTION MIT VERBESSERTEN BEFESTIGUNGSMITTELN FÜR EINEN GELENKGLIEDERFÖRDERER
STRUCTURE DE SUPPORT DOTÉE DE MOYENS DE FIXATION AMÉLIORÉS POUR UN CONVOYEUR À LIAISON ARTICULÉE

(30) Priority: 16.03.2018 IT 201800003682
(43) Date of publication of application: 02.10.2019
(73) Proprietor: Movex S.p.A., 24060 Castelli Calepio (BG) (IT)
(72) Inventor: MARSETTI, Sergio, 6900 PARADISO (CH); MARSETTI, Matteo, 24060 TELGATE (BG) (IT)
(74) Representative: Ottazzo, Marco Francesco Agostino

(56) References cited:
- EP-A1- 0 325 333
- WO-A1-2004/035432
- FR-A1- 2 741 053
- US-A1- 2012 152 700
- US-A1- 2017 036 861

## Description

The present invention generally relates to an articulated-link conveying device and, more specifically, to a support and magnetic guide structure for an articulated-link conveyor.

Even more specifically, the present invention relates to a curvilinear support structure for guiding an articulated-link conveyor at least partially made of a ferromagnetic material, wherein such support structure is provided with magnets configured for attracting the links of the conveyor towards their respective sliding surfaces. This support structure may constitute both the upper part, or forward path, and the lower part, or return path, of a closed-loop articulated-link conveyor.

As is known, an articulated-link conveyor comprises a sequence of generally plate-like links, which extend in a direction substantially transversal to the moving direction of the conveyor. In the forward path of the conveyor, in a typical closed-loop path, these links form a rest surface for the objects moved by the conveyor itself.

Considering the moving direction of the conveyor, each link is connected to the previous link and to a subsequent link by way of hinges usually located in the central part of each link. This way, the links form a continuous closed-loop conveyor, whose forward and return paths usually overlap.

The links are either made of steel, like those described in the ISO 4348 Standard, or of plastic. Should the links be made of plastic, they are conveniently provided with pivot hinges made of a ferromagnetic material in order to interact with the magnets of the support and guide structure.

As a matter of fact, the use of a support structure provided with a respective sliding rail is known to guide a closed-loop articulated-link conveyor. Each sliding rail is provided with a pair of sliding surfaces which guide the sliding movement of the opposed transversal ends of the links of the conveyor in the respective forward path. These sliding surfaces are placed either at a constant distance from each other or at different distances.

A hollow space, also referred to as channel, is present between the two sliding surfaces to allow to receive the articulation elements of the links of the conveyor. One or more guides are usually present on the surface opposed to that of the channel to route the links of the conveyor in their return path on their respective support structure.

Should it being necessary to guide a plurality of articulated-link conveyors, the support structure might be provided with a corresponding plurality of sliding rails, that is to say one sliding rail for each articulated-link conveyor. The support structure might also be provided with a plurality of return paths for the articulated-link conveyors. In this event the number of the return paths equals the number of the sliding rails of the forward paths and they are usually opposed, that is to say placed below, with respect to such sliding rails.

In the case of links at least partially made of a ferromagnetic material, the support structure is provided with a plurality of magnets. These magnets are usually positioned below the level of the sliding plane, at the center line axis of each channel. These magnets create a magnetic field which holds the links adherent to the sliding surfaces of the support structure. As a matter of fact, while the conveyor moves, the links would tend to raise from their respective sliding surface, thus jeopardizing the stability of the conveyed objects, if the attraction force exerted by the magnets were not there.

The sliding rails for articulated-link conveyors feature either a rectilinear axis or a curvilinear axis. Examples of curvilinear-axis sliding rails for ferromagnetic articulated-link conveyors are described, for example, in documents EP 0325333, EP 0790197, EP 0903307, EP 0916599, EP 1091894 and EP 2907774, the latter on behalf of the present patent applicant. Another example of a curvilinear axis sliding rail for ferromagnetic link conveyors, embodied according to the preamble of claim 1, is described in document FR 2741053 A1.

In many embodiments of articulated-link conveyors, their respective support structure consists of two separate components, joined to each other by way of fastening means usually consisting of screws or bolts. A first component comprises the sliding surfaces and the channel which hold and guide the links of the conveyor in the respective forward path. A second component, placed below the first component, comprises the support and guide elements for the links of the conveyor in the respective return path.

Since the forward path of the articulated-link conveyor is the most critical one in terms of wear and tear of the support structure, such conveyor being burdened by the weight of the objects to be conveyed in such forward path, the first component of the support structure is usually made of a better and/or more valuable, hence more expensive, material as compared to the material that the second component underneath is made of. In addition, just because of wear and tear, but also because of maintenance requirements and in order to conform to the standards ruling food conveyance (a typical use of the articulated-link conveyors is just that aiming at moving food products), it is necessary to periodically replace the sliding surfaces of the forward path of the conveyor. However, not always the present fastening means used to connect the components of the support structure of the conveyor make these replacement operations quick and easy to make.

Document US 2017/036861 A1 discloses an articulated link conveyor whose sliding surfaces are joined to the support and guide elements of the links by way of snap connection elements. These connection elements are formed in one piece along with their respective sliding surfaces and extend below such sliding surfaces along an axis of development which is substantially orthogonal to the sliding plane. These connection elements, upon being inserted in a corresponding seat obtained in the support and guide element of the links, undergo an elastic deformation. The seat consists of a continuous rail. At least one tooth is obtained on an edge of each connection element, said tooth extending transversally to the axis of development of the connection element itself. This tooth, owing to the elastic deformation underwent by its respective connection element, is designed to be snap-coupled with an undercut provided in its corresponding seat formed in the support and guide element of the links. The presence of this tooth improves the effectiveness of the coupling between the sliding surfaces and the support and guide elements of the links, but it makes it impossible to remove such sliding surfaces along a direction parallel to the axis of development of their own connection elements. In other words, in order for the sliding surfaces to be removed from their respective support elements, they shall be capable of sliding along such support element until all connection elements are completely disengaged from the rail that forms its seat. Since the sliding surfaces feature a considerable length, this removable operation is not easy nor quick to perform.

An object of the present invention is therefore to provide a support and magnetic guide structure for an articulated-link conveyor that is capable of solving the above-mentioned drawbacks of the prior art in an extremely simple, cost-effective and particularly functional manner.

In detail, an object of the present invention is to provide a support and magnetic guide structure for an articulated-link conveyor that allows to easily and quickly remove the sliding surfaces of the forward path of the conveyor.

Another object of the present invention is to provide a support and magnetic guide structure for an articulated-link conveyor that allows to definitely minimize the quantity of more "valuable" material to be used to implement the sliding surfaces of the forward path of the conveyor, with consequent reduced costs and improved performances for the complete conveying equipment.

A further object of the present invention is to provide a support and magnetic guide structure for an articulated-link conveyor that allows to make the links of the conveyor slide in the respective forward path in an easier manner as compared to the embodiments of the prior art.

These objects according to the present invention are achieved by providing a support and magnetic guide structure for an articulated-link conveyor as set forth in claim 1.

Further characteristics of the invention are highlighted by the dependent claims, which are an integral part of the present disclosure.

The characteristics and the advantages of a support and magnetic guide structure for an articulated-link conveyor according to the present invention will be more apparent from the following, explanatory but not limitative, description, which makes reference to the attached schematic drawings, wherein:
figure 1 is an isometric perspective top view of a portion of a support and magnetic guide structure for an articulated-link conveyor according to the present invention, wherein three different curvilinear guides and two respective channels delimited by such guides are visible;

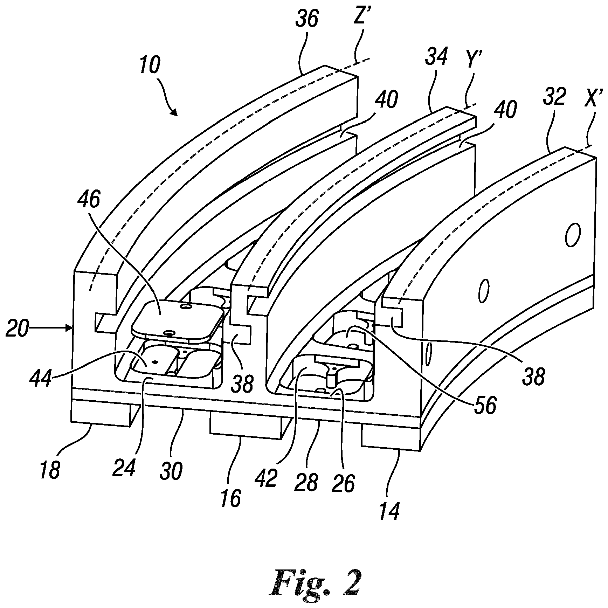

figure 2 is an isometric perspective bottom view of the structure shown in figure 1;
figure 3 is an exploded view of the structure shown in figure 1;

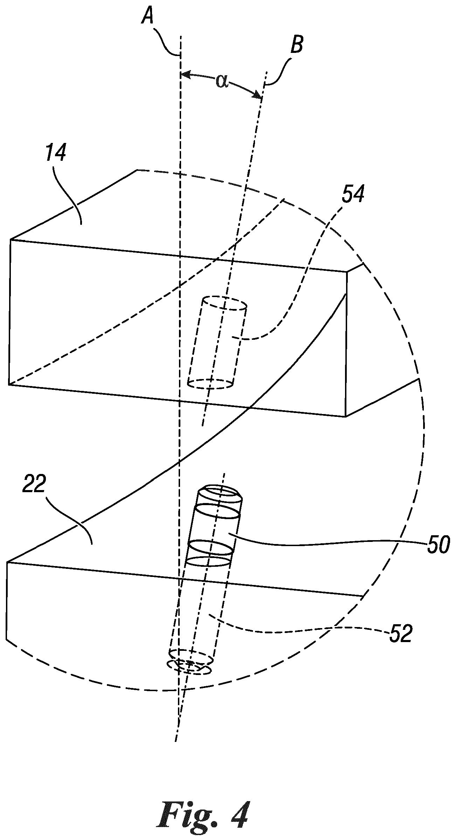

figure 4 is an enlarged view of the detail identified by IV in figure 3;
figure 5 is a perspective view of a portion of a generic articulated-link conveyor that can be used in the structure shown in figure 1; and
figures 6A and 6B show two possible embodiments of fastening means used to secure the guides to the structure shown in figure 1.

With reference to the figures, a preferred embodiment of the support and magnetic guide structure for an articulated-link conveyor according to the present invention is shown. The support and guide structure is indicated as a whole by the reference numeral 10, whereas the articulated-link conveyor is indicated by the reference numeral 12.

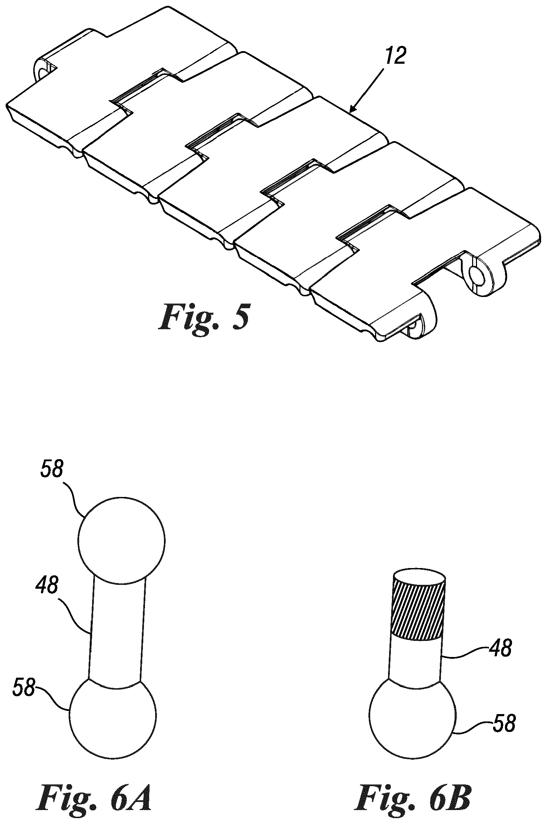

Even though one portion only of the conveyor 12 is shown in figure 5, this conveyor 12 is a closed-loop one, that is to say designed to cover a forward path and a return path, overlapped to each other, along the support and guide structure 10. Also, the support and guide structure 10 is a magnetic one, that is to say provided with a plurality of magnets (described more in details below) designed to interact with ferromagnetic portions of the links of the conveyor 12.

The support and guide structure 10 comprises at least two separate guides 14, 16, 18, arranged at a predefined distance from each other. These guides 14, 16, 18 are either equally spaced from each other or put at different distances. In the embodiment shown in the figures, three guides 14, 16, 18 are shown. However, the number of guides 14, 16, 18 might be increased at will according to the actual requirements, the minimum number being two.

The guides 14, 16, 18 are oriented along respective development axes X, Y, Z and define respective sliding surfaces for a forward path of the articulated-link conveyor 12. In the embodiment shown in the figures, the axes of development X, Y, Z are curvilinear and, more specifically, they consist of concentric arcs of circumference.

The support and guide structure 10 also comprises a support component 20 which, in turn, comprises at least one first surface 22 and at least one second surface 24, 26 opposed to each other. The guides 14, 16, 18 are fastened on the first surface 22, which faces upwards. Pairs of guides 14, 16, 18 contiguous to each other define their respective sliding channels 28, 30 which are delimited by such guides 14, 16, 18 and by at least one portion of the first surface 22. Each sliding channel 28, houses at least one portion of the articulated links of the conveyor 12 in the respective forward path.

In details, in the embodiment shown in the figures, the support and guide structure 10 comprises one single substantially flat first surface 22, designed for receiving three separate curvilinear guides 14, 16, 18. Thus, these three guides 14, 16, 18 enclose two sliding channels 28, 30 to guide two conveyors 12 in their forward path in the support and guide structure 10.

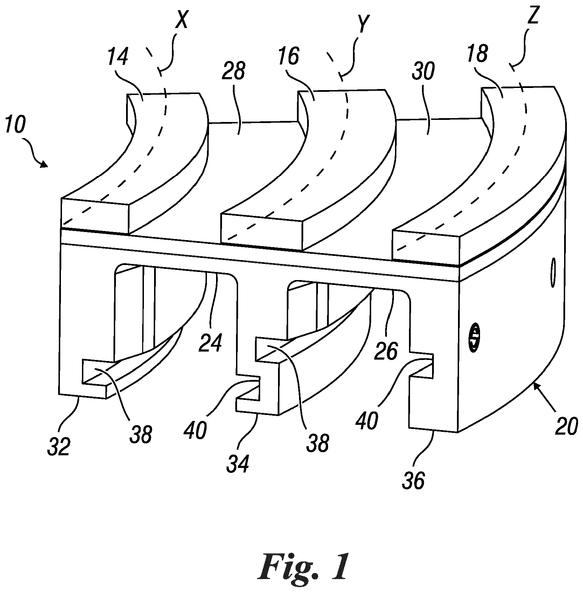

At least two walls 32, 34, 36 extend from the second surface 24, 26 and comprise respective grooves 38, 40 oriented along respective development axes X', Y', Z' that are substantially parallel to the axes of development X, Y, Z of the guides 14, 16, 18. The second surface 24, 26, being opposed to the first surface, faces downwards and, consequently, its respective walls 32, 34, 36 extend substantially downwards, as shown in figure 1. Thus, the grooves 38, 40 provide a sliding support for the articulated-link conveyor 12 in its return path.

In the embodiment shown in the figures, which comprises three different curvilinear guides 14, 16, 18 and, consequently, two separate sliding channels 28, 30 also curvilinear, the support and guide structure 10 comprises three corresponding walls 32, 34, 36. These three walls 32, 34, 36 enclose, two by two, two lower channels provided with grooves 38, 40 to guide the two conveyors 12 in their return path in the support and guide structure 10.

A plurality of cavities 42 are obtained in the support component 20, each designed for housing one or more magnets 44. Therefore, in the assembled configuration of the support and guide structure 10, the cavities 42 are open at the second surface 24, 26 or, in other words, they face downwards and, more specifically, down to the return path of the conveyor 12. Each cavity 42 is provided with at least one closing plate 46, for instance equipped with screws, which encloses the cavity 42 itself and the magnet(s) 44 contained therein.

The bottom surface 56 of each cavity 42 is put at a minimum distance from the first surface 22 in order to increase the magnetic effect with respect to the links of the conveyor 12. Preferably, the bottom surface 56 of each cavity 42 is spaced by a distance ranging from 0 mm to 10 mm from the first surface 22. Even more preferably, the bottom surface 56 of each cavity 42 is spaced by a distance ranging from 0 mm to 5 mm from the first surface 22.

The first surface 22, the second surface 24, 26 and the walls 32, 34, 36 can be integrally manufactured with a preferably polymeric material. Alternatively, as shown in the figures, the first surface 22 can be manufactured with a noble material different from the material with which the second surface 24, 26 and the walls 32, 34, 36 are manufactured, even though both polymeric materials are preferably polyethylene (PE). In this configuration, the first surface 22 can be fixed to the assembly formed by the second surface 24, 26 and the walls 32, 34, 36 by way of known fastening means, such as, for instance, screws or bolts.

Advantageously, the guides 14, 16, 18 are manufactured with a material different from the material(s) with which the first surface 22, the second surface 24, 26 and the walls 32, 34, 36 are manufactured. In particular, the material with which the guides 14, 16, 18 are manufactured has a coefficient of friction lower than the coefficient of friction of the material(s) with which the first surface 22, the second surface 24, 26 and the walls 32, 34, 36 are manufactured. Preferably, the coefficient of friction of the material with which the guides 14, 16, 18 are manufactured is lower by at least 10% than the coefficient of friction of the material(s) with which the first surface 22, the second surface 24, 26 and the walls 32, 34, 36 are manufactured.

Preferably, the material with which the guides 14, 16 are manufactured is also a polymeric material. Even more preferably, the material with which the guides 14, 16 are manufactured is a ultra-high molecular weight polyethylene (UHMW-PE) with the addition of solid lubricants. This material, known under the tradename of BluLub®, is particularly suitable for limited lubrication or fully dry applications.

Therefore, guides 14, 16 made of the BluLub® material are more smooth-flowing than if using traditional materials. These guides 14, 16, as well as reducing the sliding friction of the links of the conveyor 12 in the respective support and guide structure 10, also reduce noise and wear of the guides 14, 16 themselves, besides requiring less energy for making the conveyor 12 move forward. In addition, the guides 14, 16 only being made of the BluLub® material, which is more expensive than other polymeric materials usually used for manufacturing such support and guide structure 10, whereas the first surface 22 or other parts of the support and guide structure 10 do not, result in an economical benefit, while providing increased performances for the complete conveying equipment.

Advantageously, the guides 14, 16, 18 are provided with reversible fastening means 48, 50 which are removable with respect to the first surface 22. According to the present invention, the fastening means for fixing the guides 14, 16, 18 to the first surface 22 consist of a plurality of rigid and non-deformable connection elements 48, 50, designed for being fitted by shape coupling, through friction and without screwing, on one side, in corresponding hollow seats 52 obtained on said first surface 22 and, on the opposite side, in corresponding hollow seats 54 obtained on each guide 14, 16, 18. These hollow seats 52, 54 do not have any recesses or undercuts. These hollow seats 52, 54, as well as their respective connection elements 48, 50 which insert thereinto, are oriented either along an axis A which is substantially perpendicular to a plane of development of the first surface 22 and of each guide 14, 16, 18, or according to an acute angle α with respect to such axis A. Therefore, should the guides 14, 16, 18 have to be removed from their respective support component 20, these guides 14, 16, 18 can be lifted, in an easy and quick manner and without requiring any specific tool, or along the axis A of the hollow seats 52, 54 and of their respective connection elements 48, 50, or along a second axis B, which is tilted by said angle α with respect to the axis A. In addition, the rigidity and non-deformability of the connection elements 48, 50 prevent them from getting broken in any way during the removal operations of the guides 14, 16, 18 and make them suitable for an undefined number of subsequent utilizations.

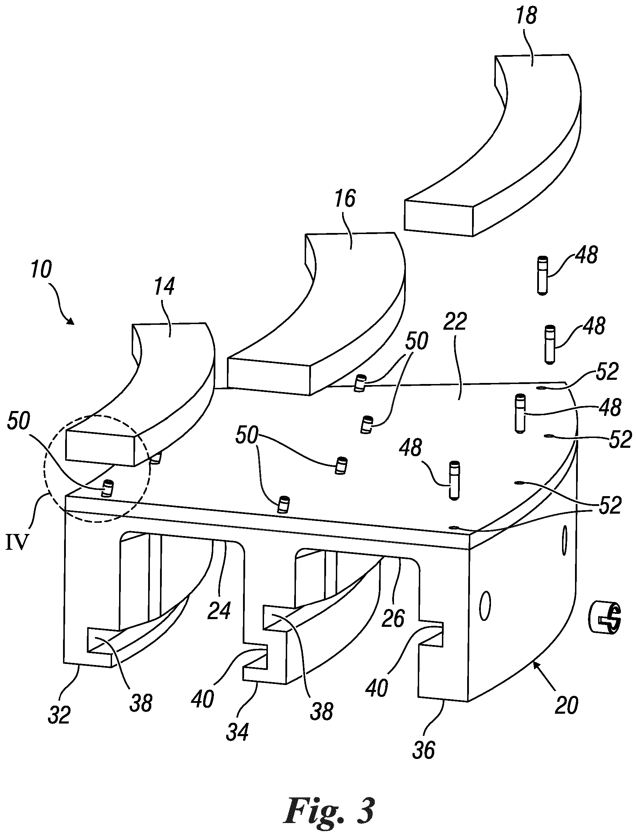

Conveniently, should the axes of development X, Y, Z of the guides 14, 16, 18 and their corresponding development axes X', Y', Z' of the grooves 38, 40 consist of concentric arcs of circumference or, in other words, should the support and guide structure 10 be curvilinear, at least one part of the connection elements 48, 50 oriented according to the angle α would be tilted toward the outer circumference of such support and guide structure 10, as shown in figure 3. This tilt counters the centripetal forces which generate while the conveyor 12 moves in the respective sliding channels 28, 30. The acute angle α is preferably an angle of about 10°.

In other words, the more the forces generated by the movement of the conveyor towards the inner circumference of the support and guide structure 10 increase, the more the respective inner guide (in this specific case consisting of the guide 14 in the attached figures) adheres to the first surface 22. Conversely, the outermost guide of the support and guide structure 10 (in this specific case consisting of the guide 18 in the attached figures) does not require connection elements 48, 50 being tilted, because such outermost guide is not stressed by the centripetal forces induced by the movement of the conveyor 12.

The connection elements 48, 50 might be any elements (a pivot, a tooth, a foil featuring a continuous or broken profile, etc.) that is designed to be fitted by shape coupling, through friction and without screwing, in the corresponding hollow seat 52, 54. Preferably the connection elements 48, 50 are cylindrical plugs. Consequently, the hollow seats 52, 54 are blind holes featuring a circular cross section.

Preferably, the connection elements 48, 50 are provided with a knurled lateral surface. This feature allows to get a greater friction force in securing its individual guide 14, 16, 18 onto its respective first rest surface 22, while retaining such fastening reversibility characteristics greater than those which would be obtained, for instance, by using fastening means consisting of screws or bolts. As shown in figures 6A and 6B, the cylindrical plugs 48 might even be provided with one or both heads 58 having an enlarged cylindrical shape, irrespective of whether the lateral surface is knurled (figure 6B) or not (figure 6A). By "enlarged cylindrical shape" we mean that each head 58 has an average thickness that is greater than the average thickness of the cross section of its respective cylindrical plug 48.

Additionally, having hollow seats that are obtained in the lower surface of each guide 14, 16, 18, which is the first contact surface with the first rest surface 22 of such guides 14, 16, 18, makes it possible to implement guides 14, 16, 18 that are smooth and do not have discontinuities above. In other words, the upper surface of the guides 14, 16, 18, which forms the sliding surface of the conveyor 12 in its respective forward path, is perfectly flat and uniform, i.e. without any holes which would conversely be necessary when using fastening means consisting of screws or bolts. This is particularly important when using a conveying equipment for moving food products. As a matter of fact, the presence of discontinuities on the sliding surfaces of the conveyor 12 would result in a residual dirt not conforming to the safety standards in force in the sector of food product conveyance.

It has been thus proved that the support and magnetic guide structure for an articulated-link conveyor according to the present invention achieves the previously highlighted objects.

The support and magnetic guide structure for an articulated-link conveyor according to the thus conceived present invention is however susceptible of numerous modifications and variants, all falling within the scope of one and the same inventive concept; also, all details can be replaced by technically equivalent elements. In practice, the materials used, as well as the shapes and dimensions, might be of any kinds depending on the actual technical requirements.

Therefore, the scope of protection of the invention is that set forth in the attached claims.

## Claims

1. A support and guide structure (10) for a closed-loop articulated-link conveyor (12), the support and guide structure (10) comprising:
- at least two separate guides (14, 16, 18) arranged at a predefined distance from each other, said guides (14, 16, 18) being oriented along respective development axes (X, Y, Z) and defining respective sliding surfaces for a forward path of the articulated-link conveyor (12);
- a support component (20) comprising:
- at least one first surface (22) and at least one second surface (24, 26) opposed to each other, wherein said guides (14, 16, 18) are fastened on said first surface (22) to define at least one sliding channel (28, 30) delimited by said guides (14, 16, 18) and by at least one portion of said first surface (22), said at least one sliding channel (28, 30) housing at least one portion of the articulated links of the conveyor (12) in the respective forward path,
- at least two walls (32, 34, 36) which extend from said second surface (24, 26) and comprise respective grooves (38, 40) oriented along respective development axes (X', Y', Z') that are substantially parallel to the development axes (X, Y, Z) of said guides (14, 16, 18), said grooves (38, 40) providing the sliding support of the articulated-link conveyor (12) in its return path, and
- a plurality of cavities (42), each designed for housing one or more magnets (44), wherein said cavities (42) are obtained in said support component (20), are open at said second surface (24, 26) and are provided with respective closing plates (46),
the support and guide structure (10) being **characterized in that** said at least two guides (14, 16, 18) are provided with fastening means (48, 50) which are reversible and removable with respect to said first surface (22), wherein said fastening means consist of a plurality of rigid and non-deformable connection elements (48, 50) designed for being fitted by shape coupling, through friction and without screwing, on one side, in corresponding hollow seats (52) obtained on said first surface (22), and, on the opposite side, in corresponding hollow seats (54) obtained on each guide (14, 16, 18), and wherein said hollow seats (52, 54) do not have any recesses or undercuts.

2. The support and guide structure (10) according to claim 1, **characterized in that** said hollow seats (52; 54) are oriented along a first axis (A) which is substantially perpendicular to a plane of development of said first surface (22) and of each guide (14, 16, 18), so that each guide (14, 16, 18), should it have to be removed from its respective support component (20), can be lifted along said first axis (A).

3. The support and guide structure (10) according to claim 1 or 2, **characterized in that** at least one part of said hollow seats (52; 54) is tilted by an acute angle (α) with respect to a first axis (A) which is substantially perpendicular to a plane of development of said first surface (22) and of each guide (14, 16, 18), so that each guide (14, 16, 18), should it have to be removed from its respective support component (20), can be lifted along a second axis (B) which is tilted by said angle (α) with respect to said first axis (A).

4. The support and guide structure (10) according to claim 3, **characterized in that** said acute angle (α) is an angle of about 10°.

5. The support and guide structure (10) according to any claims 1 to 4, **characterized in that** said connection elements (48, 50) consist of cylindrical plugs and said hollow seats (52; 54) consist of blind holes featuring a circular cross section.

6. The support and guide structure (10) according to any claims 1 to 5, **characterized in that** said connection elements (48, 50) are provided with a knurled lateral surface.

7. The support and guide structure (10) according to any claims 1 to 6, **characterized in that** the bottom surface (56) of each cavity (42) is spaced by a distance ranging from 0 mm to 10 mm from said first surface (22).

8. The support and guide structure (10) according to claim 7, **characterized in that** said distance ranges from 0 mm to 5 mm from said first surface (22).

9. The support and guide structure (10) according to any claims 1 to 8, **characterized in that** the axes of development (X, Y, Z) of said guides (14, 16, 18) and the corresponding axes of development (X', Y', Z') of said grooves are curvilinear axes.

10. The support and guide structure (10) according to claim 9, **characterized in that** the axes of development (X, Y, Z) of said guides (14, 16, 18) and the corresponding axes of development (X', Y', Z') of said grooves consist of concentric arcs of circumference.

11. The support and guide structure (10) according to any claims 1 to 10, **characterized in that** said at least two guides (14, 16, 18) are manufactured with a material different from the material(s) with which said first surface (22), said second surface (24, 26) and said walls (32, 34, 36) are manufactured.

12. The support and guide structure (10) according to claim 11, **characterized in that** the material with which said at least two guides (14, 16, 18) are manufactured has a coefficient of friction lower than the coefficient of friction of the material(s) with which said first surface (22), said second surface (24, 26) and said walls (32, 34, 36) are manufactured.

13. The support and guide structure (10) according to claim 12, **characterized in that** said coefficient of friction of the material with which said at least two guides (14, 16, 18) are manufactured is lower by at least 10% than said coefficient of friction of the material(s) with which said first surface (22), said second surface (24, 26) and said walls (32, 34, 36) are manufactured.

14. The support and guide structure (10) according to any claims 11 to 13, **characterized in that** the materials with which said first surface (22), said second surface (24, 26), said walls (32, 34, 36) and each guide (14, 16, 18) are manufactured are polymeric materials.

15. The support and guide structure (10) according to claim 14, **characterized in that** the polymeric material with which said first surface (22), said second surface (24, 26) and said walls (32, 34, 36) are manufactured is polythene (PE), whereas the polymeric material with which each guide (14, 16, 18) is manufactured is a ultra-high molecular weight polyethylene (UHMW-PE) with the addition of solid lubricants.

## Patentansprüche

1. Stütz- und Führungsstruktur (10) für eine Gelenkglied- Endlostransportanlage mit geschlossener Schleife (12), wobei die Stütz- und Führungsstruktur (10) Folgendes umfasst:
- mindestens zwei getrennte Führungen (14, 16, 18), die in einem festgelegten Abstand voneinander angeordnet sind, wobei die Führungen (14, 16, 18) entlang jeweiligen Verlaufsachsen (X, Y, Z) ausgerichtet sind und jeweilige Gleitoberflächen für einen Vorwärtsweg der Gelenkglied-Transportanlage (12) bilden,
- ein Stützbauteil (20), das Folgendes umfasst:
- mindestens eine erste Oberfläche (22) und mindestens eine zweite Oberfläche (24, 26), die einander gegenüberliegen, wobei die Führungen (14, 16, 18) an der ersten Oberfläche (22) befestigt sind, um mindestens einen Gleitkanal (28, 30) zu bilden, der durch die Führungen (14, 16, 18) und durch mindestens einen Abschnitt der ersten Oberfläche (22) begrenzt ist, wobei der mindestens eine Gleitkanal (28, 30) mindestens einen Abschnitt der Gelenkglieder der Transportanlage (12) in dem jeweiligen Vorwärtsweg beherbergt,
- mindestens zwei Wände (32, 34, 36), die sich von der zweiten Oberfläche (24, 26) aus erstrecken und jeweilige Rillen (38, 40) umfassen, die entlang jeweiliger Verlaufsachsen (X', Y', Z') ausgerichtet sind, welche im Wesentlichen parallel zu den Verlaufsachsen (X, Y, Z) der Führungen (14, 16, 18) liegen, wobei die Rillen (38, 40) die Gleitabstützung für die Gelenkglied-Transportanlage (12) in ihrem Rücklaufweg bereitstellen, und
- mehrere Hohlräume (42), die jeweils zum Beherbergen eines oder mehrerer Magnete (44) gestaltet sind, wobei die Hohlräume (42) in dem Stützbauteil (20) erzielt sind, an der zweiten Oberfläche (24, 26) offen sind und mit jeweiligen Verschlussplatten (46) versehen sind,
wobei die Stütz- und Führungsstruktur (10) **dadurch gekennzeichnet ist, dass** die mindestens zwei Führungen (14, 16, 18) mit Befestigungsmitteln (48, 50) versehen sind, die reversibel und entfernbar in Bezug auf die erste Oberfläche (22) sind, wobei die Befestigungsmittel aus mehreren starren und nicht verformbaren Verbindungselementen (48, 50) bestehen, die dazu gestaltet sind, durch Formschluss, durch Reibung und ohne Verschraubung auf einer Seite in entsprechende Hohlsitze (52) eingepasst zu werden, die an der ersten Oberfläche (22) erzielt sind, und auf der anderen Seite in entsprechende Hohlsitze (54), die an jeder Führung (14, 16, 18) erzielt sind, und wobei die Hohlsitze (52, 54) keine Vertiefungen oder Hohlkehlen aufweisen.

2. Stütz- und Führungsstruktur (10) nach Anspruch 1, **dadurch gekennzeichnet, dass** die Hohlsitze (52, 54) entlang einer ersten Achse (A) ausgerichtet sind, die im Wesentlichen rechtwinklig zu einer Ebene des Verlaufs der ersten Oberfläche (22) und jeder Führung (14, 16, 18) liegt, sodass jede Führung (14, 16, 18), sollte sie von ihrem jeweiligen Stützbauteil (20) entfernt werden müssen, entlang der ersten Achse (A) angehoben werden kann.

3. Stütz- und Führungsstruktur (10) nach Anspruch 1 oder 2, **dadurch gekennzeichnet, dass** mindestens ein Teil der Hohlsitze (52, 54) um einen spitzen Winkel (α) in Bezug auf eine erste Achse (A) geneigt ist, die im Wesentlichen rechtwinklig zu einer Ebene des Verlaufs der ersten Oberfläche (22) und jeder Führung (14, 16, 18) liegt, sodass jede Führung (14, 16, 18), sollte sie von ihrem jeweiligen Stützbauteil (20) entfernt werden müssen, entlang einer zweiten Achse (B) angehoben werden kann, die um den Winkel (α) in Bezug auf die erste Achse (A) geneigt ist.

4. Stütz- und Führungsstruktur (10) nach Anspruch 3, **dadurch gekennzeichnet, dass** der spitze Winkel (α) ein Winkel von etwa 10° ist.

5. Stütz- und Führungsstruktur (10) nach einem der Ansprüche 1 bis 4, **dadurch gekennzeichnet, dass** die Verbindungselemente (48, 50) aus zylindrischen Stopfen bestehen und die Hohlsitze (52, 54) aus Blindlöchern bestehen, die einen kreisrunden Querschnitt aufweisen.

6. Stütz- und Führungsstruktur (10) nach einem der Ansprüche 1 bis 5, **dadurch gekennzeichnet, dass** die Verbindungselemente (48, 50) mit einer gerändelten Seitenoberfläche versehen sind.

7. Stütz- und Führungsstruktur (10) nach einem der Ansprüche 1 bis 6, **dadurch gekennzeichnet, dass** die Bodenoberfläche (56) jedes Hohlraums (42) in einem Abstand im Bereich von 0 mm bis 10 mm von der ersten Oberfläche (22) beabstandet ist.

8. Stütz- und Führungsstruktur (10) nach Anspruch 7, **dadurch gekennzeichnet, dass** der Abstand im Bereich von 0 mm bis 5 mm von der ersten Oberfläche (22) liegt.

9. Stütz- und Führungsstruktur (10) nach einem der Ansprüche 1 bis 8, **dadurch gekennzeichnet, dass** die Achsen des Verlaufs (X, Y, Z) der Führungen (14, 16, 18) und die entsprechenden Achsen des Verlaufs (X', Y', Z') der Rillen gekrümmte Achsen sind.

10. Stütz- und Führungsstruktur (10) nach Anspruch 9, **dadurch gekennzeichnet, dass** die Achsen des Verlaufs (X, Y, Z) der Führungen (14, 16, 18) und die entsprechenden Achsen des Verlaufs (X', Y', Z') der Rillen aus konzentrischen Umfangsbögen bestehen.

11. Stütz- und Führungsstruktur (10) nach einem der Ansprüche 1 bis 10, **dadurch gekennzeichnet, dass** die mindestens zwei Führungen (14, 16, 18) mit einem Material hergestellt sind, das sich von dem/den Material/ein unterscheidet, mit dem/denen die erste Oberfläche (22), die zweite Oberfläche (24, 26) und die Wände (32, 34, 36) hergestellt sind.

12. Stütz- und Führungsstruktur (10) nach Anspruch 11, **dadurch gekennzeichnet, dass** das Material, mit dem die mindestens zwei Führungen (14, 16, 18) hergestellt sind, einen Reibungskoeffizienten aufweist, der niedriger ist als der Reibungskoeffizient des Materials / der Materialien, mit dem/denen die erste Oberfläche (22), die zweite Oberfläche (24, 26) und die Wände (32, 34, 36) hergestellt sind.

13. Stütz- und Führungsstruktur (10) nach Anspruch 12, **dadurch gekennzeichnet, dass** der Reibungskoeffizient des Materials, mit dem die mindestens zwei Führungen (14, 16, 18) hergestellt sind, um mindestens 10 % niedriger ist als der Reibungskoeffizient des Materials / der Materialien, mit dem/denen die erste Oberfläche (22), die zweite Oberfläche (24, 26) und die Wände (32, 34, 36) hergestellt sind.

14. Stütz- und Führungsstruktur (10) nach einem der Ansprüche 11 bis 13, **dadurch gekennzeichnet, dass** die Materialien, mit denen die erste Oberfläche (22), die zweite Oberfläche (24, 26), die Wände (32, 34, 36) und jede Führung (14, 16, 18) hergestellt sind, Polymermaterialien sind.

15. Stütz- und Führungsstruktur (10) nach Anspruch 14, **dadurch gekennzeichnet, dass** die Polymermaterialien, mit denen die erste Oberfläche (22), die zweite Oberfläche (24, 26) und die Wände (32, 34, 36) hergestellt sind, Polyethylen (PE) ist, wohingegen das Polymermaterial, mit dem jede Führung (14, 16, 18) hergestellt ist, ein Polyethylen mit ultrahoher Molekülmasse (Ultra-High-Molecular-Weight Polyethylene, UHMWPE) mit dem Zusatz von Festschmierstoffen ist.

## Revendications

1. Structure de support et de guidage (10) pour un convoyeur à maillons articulés en boucle fermée (12), la structure de support et de guidage (10) comprenant :
- au moins deux guides séparés (14, 16, 18) disposés à une distance prédéfinie des uns les autres, lesdits guides (14, 16, 18) étant orientés le long d'axes de développement respectifs (X, Y, Z) et définissant des surfaces de glissement respectives pour une trajectoire d'avance du conveyor à maillons articulés (12) ;
- un élément de support (20) comprenant,
- au moins une première surface (22) et au moins une seconde surface (24, 26) opposées l'une à l'autre, dans lequel lesdits guides (14, 16, 18) sont fixés sur ladite première surface (22) pour définir au moins un canal de glissement (28, 30) délimité par lesdits guides (14, 16, 18) et par au moins une partie de ladite première surface (22), ledit au moins un canal de glissement (28, 30) logeant au moins une partie des maillons articulés du conveyor (12) dans la trajectoire d'avance respectif,
- au moins deux parois (32, 34, 36) qui s'étendent à partir de ladite seconde surface (24, 26) et comprennent des rainures respectives (38, 40) orientées le long d'axes de développement respectifs (X', Y', Z') qui sont sensiblement parallèles aux axes de développement (X, Y, Z) desdits guides (14, 16, 18), lesdites rainures (38, 40) fournissant le support coulissant du conveyor à maillons articulés (12) dans sa trajectoire de retour, et
- une pluralité de cavités (42), chacune conçue pour loger un ou plusieurs aimants (44), dans laquelle lesdites cavités (42) sont obtenues dans ledit composant de support (20), sont ouvertes au niveau de ladite deuxième surface (24, 26) et sont pourvues de plaques de fermeture respectives (46),
la structure de support et de guidage (10) étant **caractérisée en ce que** lesdits au moins deux guides (14, 16, 18) sont pourvus de moyens de fixation (48, 50) qui sont réversibles et amovibles par rapport à ladite première surface (22), dans lequel lesdits moyens de fixation consistent en une pluralité d'éléments de connexion rigides et non déformables (48, 50) conçus pour être montés par accouplement de forme, par friction et sans vissage, sur un côté, dans des sièges creux correspondants (52) obtenus sur ladite première surface (22), et, sur le côté opposé, dans des sièges creux correspondants (54) obtenus sur chaque guide (14, 16, 18), et dans lequel lesdits sièges creux (52, 54) n'ont pas d'évidements ou de contre-dépouilles.

2. Structure de support et de guidage (10) selon la revendication 1, **caractérisée en ce que** lesdits sièges creux (52 ; 54) sont orientés le long d'un premier axe (A) qui est sensiblement perpendiculaire à un plan de développement de ladite première surface (22) et de chaque guide (14, 16, 18), de sorte que chaque guide (14, 16, 18), s'il devait être retiré de son élément de support respectif (20), peut être soulevé le long dudit premier axe (A).

3. Structure de support et de guidage (10) selon la revendication 1 ou 2, **caractérisée en ce qu'**au moins une partie desdits sièges creux (52 ; 54) est inclinée d'un angle aigu (α) par rapport à un premier axe (A) qui est sensiblement perpendiculaire à un plan de développement de ladite première surface (22) et de chaque guide (14, 16, 18), de sorte que chaque guide (14, 16, 18), s'il doit être retiré de son élément de support respectif (20), peut être soulevé le long d'un second axe (B) qui est incliné dudit angle (α) par rapport audit premier axe (A).

4. Structure de support et de guidage (10) selon la revendication 3, **caractérisée en ce que** ledit angle aigu (α) est un angle d'environ 10°.

5. Structure de support et de guidage (10) selon les revendications 1 à 4, **caractérisée en ce que** lesdits éléments de connexion (48, 50) sont constitués de fiches cylindriques et lesdits sièges creux (52 ; 54) sont constitués de trous borgnes de section circulaire.

6. Structure de support et de guidage (10) selon l'une quelconque des revendications 1 à 5, **caractérisée en ce que** lesdits éléments de connexion (48, 50) sont munis d'une surface latérale moletée.

7. Structure de support et de guidage (10) selon l'une quelconque des revendications 1 à 6, **caractérisée en ce que** la surface inférieure (56) de chaque cavité (42) est comprise entre 0 mm à 10 mm de ladite première surface (22).

8. Structure de support et de guidage (10) selon la revendication 7, **caractérisée en ce que** ladite distance est comprise entre 0 mm et 5 mm de ladite première surface (22).

9. Structure de support et de guidage (10) selon l'une quelconque des revendications 1 à 8, **caractérisée en ce que** les axes de développement (X, Y, Z) desdits guides (14, 16, 18) et les axes de développement correspondants (X', Y', Z') de ces rainures sont des axes curvilignes.

10. Structure de support et de guidage (10) selon la revendication 9, **caractérisée en ce que** les axes de développement (X, Y, Z) desdits guides (14, 16, 18) et les axes de développement correspondants (X', Y', Z') desdites rainures consistent en des arcs de circonférence concentriques.

11. Structure de support et de guidage (10) selon l'une quelconque des revendications 1 à 10, **caractérisée en ce que** lesdits au moins deux guides (14, 16, 18) sont fabriqués avec un matériau différent du ou des matériaux avec lesquels ladite première surface (22), ladite deuxième surface (24, 26) et lesdites parois (32, 34, 36) sont fabriquées.

12. Structure de support et de guidage (10) selon la revendication 11, **caractérisée en ce que** le matériau avec lequel lesdits au moins deux guides (14, 16, 18) sont fabriqués a un coefficient de frottement inférieur au coefficient de frottement du ou des matériaux avec lesquels ladite première surface (22), ladite deuxième surface (24, 26) et lesdites parois (32, 34, 36) sont fabriquées.

13. Structure de support et de guidage (10) selon la revendication 12, **caractérisée en ce que** ledit coefficient de frottement du matériau avec lequel lesdits au moins deux guides (14, 16, 18) sont fabriqués est inférieur d'au moins 10 % audit coefficient du frottement du ou des matériaux avec lesquels ladite première surface (22), ladite deuxième surface (24, 26) et lesdites parois (32, 34, 36) sont fabriquées.

14. Structure de support et de guidage (10) selon l'une quelconque des revendications 11 à 13, **caractérisée en ce que** les matériaux avec lesquels ladite première surface (22), ladite deuxième surface (24, 26), lesdites parois (32, 34, 36) et chaque guide (14, 16, 18) sont fabriqués sont des matériaux polymères.

15. Structure de support et de guidage (10) selon la revendication 14, **caractérisée en ce que** le matériau polymère avec lequel ladite première surface (22), ladite deuxième surface (24, 26) et lesdites parois (32, 34, 36) sont fabriquées est du polyéthylène (PE), tandis que le matériau polymère avec lequel chaque guide (14, 16, 18) est fabriqué est un polyéthylène de poids moléculaire ultra-élevé (UHMW-PE) avec l'ajout de lubrifiants solides.
